# EUROPEAN PATENT SPECIFICATION

(11) **EP 2 986 664 B1**
(45) Date of publication and mention of the grant of the patent: **21.03.2018**
(21) Application number: 14717746.3
(22) Date of filing: 14.04.2014
(51) Int. Cl.: C08K 9/08, C08J 9/32, C08J 9/00, E04B 1/90, E04B 1/74

(54) **MELAMINE-FORMALDEHYDE FOAMS COMPRISING MICROSPHERES HAVING AT LEAST ONE ACTIVE AND/OR EFFECTIVE SUBSTANCE IN THE CORE AND A SHELL OF MELAMINE-FORMALDEHYDE RESIN**
MELAMIN-FORMALDEHYD-SCHAUMSTOFFE MIT MIKROKÜGELCHEN MIT MINDESTENS EINER AKTIVEN UND/ODER WIRKSAMEN SUBSTANZ IM KERN UND EINER SCHALE AUS MELAMIN-FORMALDEHYD-HARZ
MOUSSES DE MÉLAMINE-FORMALDÉHYDE COMPRENANT DES MICROSPHÈRES POSSÉDANT AU MOINS UNE SUBSTANCE ACTIVE ET/OU EFFICACE DANS LE COEUR ET UNE ENVELOPPE EN RÉSINE DE MÉLAMINE-FORMALDÉHYDE

(30) Priority: 15.04.2013 EP 13163710
(43) Date of publication of application: 24.02.2016
(73) Proprietor: BASF SE, 67056 Ludwigshafen am Rhein (DE)
(72) Inventor: STEINKE, Tobias Heinz, 67346 Speyer (DE); NESSEL, Peter, 67067 Ludwigshafen (DE); PUNG, David John, Loveland, Ohio 45140 (US)
(86) International application number: PCT/EP2014/057472
(87) International publication number: WO 2014/170243

(56) References cited:
- US-A1- 2010 144 913
- US-A1- 2012 291 801
- US-A1- 2012 292 552

## Description

The present invention relates to a melamine-formaldehyde foam comprising microspheres having a core comprising at least one active and/or effective substance selected from the group consisting of foam glass, sodium sulfate, sodium lauryl sulfate, polyethyleneglycols, cocoamides, fatty alcohols, quarternary ammonium salts, latent heat accumulators, flame retardants, intumescents, hydrophobicizing agents, adhesives, substances influencing the soil release behavior, formaldehyde scavenger, substances improving indoor air quality, skin care products and formulations, abrasives and mixtures thereof and having a shell comprising at least one melamine-formaldehyde resin, to a process for the preparation of this melamine-formaldehyde foam, and to its use for acoustical and/or thermal insulation in buildings, vehicles, railways, ships and in aircraft construction and also in space travel and as a cushioning material for the padding of seating areas.

EP-A-17 672 and EP-37 470 already disclose foams based on melamine-formaldehyde condensation products and also a process for production thereof.

It is also known to endow such foams with microspheres. The microspheres may contain active or effective substances, for example substances that act as latent heat storage media and so improve the thermal insulation properties of the melamine-formaldehyde foams, or else scents or biocidally active substances, which are released on destruction of the hollow microsphere walls to develop their specific effective for the particular desired purpose. It is similarly possible to hydrophobicize the foam structure by encapsulation and subsequent release of hydrophobic substances, for example silicone oils.

EP 2 531 551 A1 describes for example melamine-formaldehyde foams comprising microcapsules having a median particle diameter of 0.5 to 100 µm. These microcapsules are preferably incorporated into the nodal points or struts of the foam structure.

EP 2 501 749 A1 describes melamine-formaldehyde foams comprising expanded microspheres having a median particle diameter of 70 to 250 µm. The microspheres are preferably incorporated into the pores of the foam structure. Incorporation into the pores is achieved by a multistage production process wherein the melamine-formaldehyde foam is produced in a first step and the microspheres are introduced into the foam in a second additional impregnating step.

WO 2012/156345 A1 discloses melamine-formaldehyde foams comprising microspheres, wherein these microspheres optionally comprise active and/or effective substances. The microspheres have an average particle diameter of 260 to 490 µm (D₅₀, volume averaged, Malvern, Fraunhofer diffraction). Suitable polymers for the shells of these microspheres may be polyurethanes, epoxy resins, polyesters, polycarbonates, polyacrylates, polyamides or mixtures thereof.

US 2012/0291801 A1 and US 2012/0292552 A1 disclose melamine-formaldehyde foams comprising microspheres.

According to US 2012/0291801 A1, it is disclosed that polymers suitable for the hollow microsphere walls are preferably polyurethane, melamine-formaidehyde resin, epoxy resin, polyester, polycarbonate, polyacrylates, polyamides or mixtures thereof. The content of the hollow microspheres is disclosed very generally, like for example, surfactants, dyes, scents, acids etc.

US 2012/0292552 A1 discloses that polymers suitable for the hollow microsphere walls are preferably polyurethane, melamine-formaldehyde resin, epoxy resin, polyester, polycarbonate, polyacrylates, polyamides or mixtures thereof. The content of the hollow microspheres is for example surfactants, detergents or dyes.

However, incorporation into the nodal points or struts of the foam structure can be associated, particularly at high loadings with microspheres, with impairment of the foaming operation and/or of the mechanical properties of the foam. Subsequent impregnation of the foam is an additionally necessary process step and, on the other hand, introducing and fixing the microspheres to the foam is difficult with increasing loading.

The problem addressed by the present invention is accordingly that of providing a melamine-formaldehyde foam endowed with microspheres comprising at least one active and/or effective substance which substantially retains good mechanical foam properties even at high loadings, i.e., microsphere contents, provides better fixation of the microspheres in the foam, and is obtainable in simple processes without additional production step.

We have found that this problem is solved by a melamine-formaldehyde foam comprising microspheres having a core comprising at least one active and/or effective substance selected from the group consisting of foam glass, sodium sulfate, sodium lauryl sulfate, polyethyleneglycols, cocoamides, fatty alcohols, quaternary ammonium salts, latent heat accumulators, flame retardants, intumescents, hydrophobicizing agents, adhesives, substances influencing the soil release behavior, formaldehyde scavenger, substances improving indoor air quality, skin care products and formulations, abrasives and mixtures thereof and having a shell comprising at least one melamine-formaldehyde resin, as defined in claim 1.

The core of the microspheres that are used according to the present invention comprises at least one active and/or effective substance. Active and/or effective substances are for example substances that act as latent heat accumulator which improve the heat insulation characteristic of melamine-formaidehyde foams, or flame retardants, surfactants, which are freed after damage of the shell and can then develop their specific defect in the desired use.

The melamine-formaldehyde foams of the present invention have good mechanical foam properties and better fixation of the microspheres in the foam particularly at high loadings, i.e., hollow microsphere contents. Furthermore, the microspheres can be incorporated in the foam in the course of foam production without additional process step.

Melamine-formaldehyde foams as such and their production and also microspheres comprising at least one active and/or effective substance according to the present invention as such and their production are known to a person skilled in the art and described in the literature, see for example the references mentioned at the beginning.
The melamine-formaldehyde foams of the present invention comprise microspheres having a core comprising at least one active and/or effective substance and having a shell comprising at least one melamine-formaldehyde resin. These microspheres preferably have a median particle diameter (D₅₀, volume averaged, Malvern, Fraunhofer diffraction) in the range from 100 µm to 1000 µm, more preferably in the range from 200 µm to 800 µm and most preferably in the range from 300 µm to 700 µm.
The microsphere content is preferably in the range from 0.1% to 60% by weight, more preferably in the range from 5% to 50% by weight and most preferably in the range from 10% to 30% by weight, the weight all being based on melamine-formaldehyde precondensate used for foam production.
The melamine-formaldehyde foams according to the present invention preferably have an open-cell foam scaffold comprising a multiplicity of interconnected, three-dimensionally branched struts (the points of connection between the struts being known as "nodes" or "nodal points").
The preferred microsphere median particle diameter and the herein below described production process for the melamine-formaldehyde foams of the present invention cause the microspheres to become preferentially embedded into the open-cell pores of the foam structure. Incorporation into the struts or nodes of the foam scaffold does not take place to any significant extent, if at all. As a result, good fixation of the microspheres in the foam is achieved even at high microsphere contents without the mechanical properties of the foam becoming excessively affected.

The melamine-formaldehyde foam is prepared from an unmodified melamine-formaldehyde precondensate, i.e., a melamine-formaldehyde precondensate devoid of any other thermoset-formers or other aldehydes. Further details concerning melamine-formaldehyde condensation products may be found in Houben-Weyl, Methoden der organischen Chemie, volume 14/2, 1963, pages 319 to 402.

The melamine-formaldehyde foams comprising microspheres according to the present invention are preferably obtainable by the process comprising at least process steps a) and b):
a) Heating of a mixture comprising at least one melamine-formaldehyde precondensate, microspheres comprising the at least one active and/or effective substance in the core and having a shell comprising at least one melamine-formaldehyde resin, and optionally further additives, to obtain a corresponding foam, and
b) Drying of the foam that is obtained in step a).

Steps a) and b) of the process according to the present invention are explained in detail in the following:

According to step a) of the process according to the present invention a mixture comprising the mentioned components is provided. Preferably, an aqueous mixture, for example an aqueous solution or dispersion, particularly preferably an aqueous emulsion, comprising the at least one melamine-formaldehyde precondensate and microspheres comprising at least one active and/or effective substance in the core and having a shell comprising at least one melamine-formaldehyde resin, and optionally further additives, is provided.

Providing the mixture according to step a) of the process according to the present invention can be accomplished according to methods that are known to the skilled artisan.

The at least one melamine-formaldehyde precondensate that is used according to step a) of the process according to the present invention has been explained in detail above. Preferably the molar ratio of formaldehyde to melamine is in the range of 1.3 to 5, more preferably 2.5 to 3.5. If further thermoset-formers and/or other aldehydes are present, the mentioned ratio applies to the sum of thermoset-formers or aldehydes respectively.

The concentration of the melamine-formaldehyde precondensate in the mixture of precondensate and solvent/dispersant, more particularly water, can vary within wide limits between 55% and 85% by weight and preferably between 63% and 80% by weight, all based on the total weight of melamine-formaldehyde precondensate and solvent/dispersant.

Accordingly, the mixture that is used according to step a) of the process according to the present invention preferably comprises 55 to 85 parts by weight, preferably 63 to 80 parts by weight, of melamine-formaldehyde precondensate, and 15 to 45 parts by weight, preferably 20 to 37 parts by weight, of water. In addition, the mixture comprises microspheres comprising at least one active and/or effective substance in the core and having a shell comprising at least one melamine-formaldehyde resin, preferably in an amount of 0.1% to 60% by weight, more preferably in the range from 5% to 50% by weight and most preferably in the range from 10% to 30% by weight, the weight all being based on melamine-formaldehyde precondensate.

The mixture of the melamine-formaldehyde precondensate used in step a) may be free of further additives.

However, it can be beneficial for some purposes to add up to 20% by weight, and preferably less than 10% by weight, based on the melamine-formaldehyde precondensate, of customary additives, such as dyes, flame retardants, UV stabilizers, agents to lower combustion gas toxicity or to promote carbonization. Since the foams according to the present invention are generally open celled and capable of imbibing water, some applications make it necessary to add hydrophobicizers in amounts of 0.2% to 5% by weight. Useful hydrophobicizers include for example silicones, paraffins, silicone surfactants, fluorosurfactants, hydrophobic hydrocarbonaceous surfactants, silicone emulsions and fluorocarbon emulsions.

Depending on the selection of melamine-formaldehyde precondensates, the mixture comprises at least one blowing agent as an additive.

Therefore, according to a preferred embodiment of the process according to the present invention, the mixture that is provided in step a) comprises at least one blowing agent. In principle, physical and/or chemical blowing agents can be used in the process according to the present invention.

In respect of physical or chemical blowing agents see Encyclopedia of Polymer Science and Technology, Vol. I, 3rd Edition, Chapter Additives, pages 203 to 218, 2003.

Suitable physical blowing agents are for example hydrocarbons, such as pentane, hexane, halogenated, in particular chlorinated and/or fluorinated hydrocarbons, such as methylene chloride, chloroform, preferably dry, chloroethane, fluorochlorohydrocarbons, partially halogenated fluorochlorohydrocarbons (H-FCKW), alcohols, such as methanol, ethanol, n- or iso-propanol, ethers, ketones and esters, such as formic acid methyl ester, formic acid ethyl ester, acetic acid methyl ester or acetic acid ethyl ester, in liquid form or air, nitrogen and carbondioxide as gases.

Suitable chemical blowing agents are for example isocyanate in mixture with water, wherein the acting blowing agent is carbondioxide. Furthermore, carbonates and bicarbonates in mixture with acids are suitable, which can create carbon dioxide, too. Furthermore, azo compounds such as azo dicarbonamide, are suitable.

The amount of blowing agent generally corresponds to the desired density of the foam. According to a preferred embodiment of the present invention, the mixture comprises at least one blowing agent in an amount of from 0.5 to 60% by weight, preferably 1 to 40% by weight, particularly preferable 1.5 to 30% by weight, in each case based on the melamine-formaldehyde precondensate. Preferably, a physical blowing agent having a boiling point in the range of from 0 to 80 °C is added.

As a further additive at least one curing agent may be present in the mixture according to step a) of the process according to the present invention.

As curing agent, acidic compounds may be added, which catalyze the further condensation of the melamine resin. The amount of curing agent is in general 0.01 to 20% by weight, preferably 0.05 to 5% by weight, in each case based on the precondensate. Suitable acidic compounds are inorganic and organic acids selected from the group consisting of hydrogen chloride, sulphuric acid, phosphoric acid, nitric acid, formic acid, acidic acid, oxalic acid, toluolsulfonic acid, amido sulfonic acids, acid anhydrides and mixtures thereof.

Emulsification of the blowing agent and stabilization of the foam in step a) is preferably achieved by the addition of a dispersant, e.g., an emulsifier or emulsifier mixture. Useful emulsifiers include anionic, cationic and nonionic surfactants and also mixtures thereof.

Suitable anionic surfactants are diphenylene oxide sulfonates, alkane- and alkylbenzenesulfonates, alkylnaphthalenesulfonates, olefinsulfonates, alkyl ether sulfonates, fatty alcohol sulfates, ether sulfates, alpha-sulfo fatty acid esters, acylaminoalkanesulfonates, acyl isethionates, alkyl ether carboxylates, N-acylsarcosinates, alkyl and alkyl ether phosphates.

Useful nonionic surfactants include alkylphenol polyglycol ethers, fatty alcohol polyglycol ethers, fatty acid polyglycol ethers, fatty acid alkanolamides, EO-PO block copolymers, amine oxides, glycerol fatty acid esters, sorbitan esters and alkylpolyglucosides.

Useful cationic emulsifiers include alkyltriammonium salts, alkylbenzyldimethylammonium salts and alkylpyridinium salts.

The emulsifiers are preferably added in amounts of 0.2% to 5% by weight, based on the melamine-formaldehyde precondensate.

According to a preferred embodiment, the mixture comprises at least one emulsifier, at least one curing agent, at least one blowing agent in addition to the melamine-formaldehyde precondensate of the desired foam and microspheres.

As a further additive, metal complex dyes may be present in the mixture according to step a) of the process according to the present invention.

According to the process of the present invention, these metal complex dyes can be mixed with the microspheres before these are mixed with the at least one precondensate. It is further possible that the microspheres are first mixed with the precondensate, preferably emulsified in water, and this mixture is then mixed with optionally present metal complex dyes.
In step a) of the process according to the present invention, the mixture as mentioned above is heated to obtain a foam of the at least one precondensate and the microspheres.
Preferably, the mixture of step a) is heated to a temperature above the boiling point of the at least one blowing agent, in order to obtain the desired foam. To obtain this, the mixture is preferably heated to a temperature above the boiling point of the at least one blowing agent and is foamed in a closed molding.
Preferably, the energy input to heat the mixture in step a) according to the present invention, can be carried out by electromagnetic irradiation, for example by high frequency irradiation of 5 to 400 kW, preferably 5 to 200 kW, particularly preferably 9 to 120 kW per 1 kg of the mixture used in a frequency range of 0.2 to 100 GHz, preferably 0.5 to 10 GHz. Magnetrons are a suitable source of radiation for dielectric radiation with one or more magnetrons being able to be irradiated at the same time.
In step b), the foams that are obtained in step a) are dried, wherein water, optionally present volatile components and/or at least one blowing agent which are present in the foam are removed.
The microspheres that are used according to the present invention may be prepared according to any process that is known to the skilled artisan.
A preferred process for the preparation of the microspheres according to the present invention comprises at least the following steps:
(1) Providing a solution comprising at least one melamine-formaldehyde precondensate and optionally further additives, and
(2) Coating of the effective and/or active substances with the solution of step (1) to obtain microspheres having a core comprising at least one effective and/or active substance and a shell comprising at least one melamine-formaldehyde resin.
The melamine-formaldehyde precondensate that is used for the preparation of the shell of microspheres according to the present invention has in general a molar ratio of formaldehyde to melamine of more than 2, preferably 2.5 to 3.5.

Examples of useful other thermoset-formers are alkyl- and aryl-alkyl-substituted melamine, urea, urethanes, carboxamides, dicyandiamide, guanidine, sulfurylamide, sulfonamides, aliphatic amines, glycols, phenol and its derivatives.
Examples of useful other aldehydes are acetaldehyde, trimethylolacetaldehyde, acrolein, benzaldehyde, furfurol, glyoxal, glutaraldehyde, phthalaldehyde and terephthalaldehyde.
In respect of the shell of the microspheres, an unmodified melamine-formaldehyde precondensate is used, i.e., a melamine-formaldehyde precondensate devoid of any other thermoset-formers or other aldehydes. Further details concerning melamine-formaldehyde condensation products may be found in Houben-Weyl, Methoden der organischen Chemie, volume 14/2, 1963, pages 319 to 402.
According to step (1) of the process for the preparation of microspheres according to the present invention, the melamine-formaldehyde precondensate is provided in solution, in particular in an aqueous solution, more preferably at about 30 to 50% by weight, most preferably about 35 to 45% by weight, which is treated with a curing agent afterwards. Preferably, the solution further comprises further additives; in particular a curing agent is conducted preferably at room temperature. Higher temperatures reduce the durability of the melamine-formaldehyde resin solution due to polymerization of the melamine-formaldehyde resin.
According to a preferred embodiment of the present invention the reaction of the melamine-formaldehyde precondensate to obtain a corresponding melamine-formaldehyde resin occurs essentially during the coating of the core material.
The core of the microspheres that are used according to the present invention comprises at least one active and/or effective substance selected from the group consisting of
- foam glass, sodium sulfate and mixtures thereof,
- latent heat accumulators, which preferably improve the heat insulation characteristic of melamine-formaldehyde foams selected from the group consisting of paraffin, fatty acids, salt hydrates and mixtures thereof,
- flame retardants selected from the group consisting of minerals, like aluminum hydroxide, magnesium hydroxide, hydrates, borates, red phosphor, organo halogen compounds, like organo chlorines, organo bromines, like polybrominated diphenyl ethers, organophosphorous compounds, like organo phosphates, e. g. triphenylphosphate, and mixtures thereof,
- sodium lauryl sulfate, polyethyleneglycols, cocoamides, fatty alcohols, quaternary ammonium salts, e. g. alkyl dimethyl benzyl ammonium chloride, and mixtures thereof,
- intumescents containing three active additives, e. g. acid source, like phosphoric acid, carbonific or polyhydric compound, like starch, and blowing agent, like melamine,
- hydrophobicizing agents selected from the group consisting of silicon oil, fluoro carbon resin and mixtures thereof,
- adhesives selected from the group consisting of pressure-sensitive adhesive, e. g. based on elastomer, like ethylene-vinyl acetate (EVA) and a tackifier, contact adhesives, e. g. natural rubber, reactive adhesives and mixtures thereof,
- formaldehyde scavenger selected from the group consisting of urea, ethylene urea, ethylene glycol, polyols, amides, hydrazides, sorbitol, carbohydrazides and mixtures thereof,
- photocatalytically active titanium dioxide,
- skin care products and formulations selected from the group consisting of natural oils, e. g. coconut oil, anti-oxidizing agents, e. g. vitamins like E, C, B3, and mixtures thereof,
- abrasives selected from the group consisting of silicates, chalk, marble powder, inorganic nanoparticles and mixtures thereof,
and mixtures thereof.

These active and/or effective substances that are used according to the present invention are freed after damage of the shell and can then develop their specific defect in the desired use.

The ratio by weight of core to shell of the microspheres that are used according to the present invention, the so called core/shell-ratio, is in general 50 : 50 to 95 : 5, preferably 60 : 40 to 95 : 5, more preferably 65 : 35 to 90 : 10.

For applying the shell onto the core of the microspheres that are used according to the present invention, according to step b), numerous processes are known to the skilled artisan. The skilled artisan may differentiate between methods in which particles are moved mechanically or fluidized bed processes, see for example H. Uhlemann, L. Mörl, Fluidized Bed Spray Granulation, Berlin 2000, pages 466 ff.

A preferred method for the preparation of the microspheres in step (2) of the process according to the present invention is a fluidized bed spray granulation. The principle of said method is based on flowing of gas through a powdery bed of solids until fluidized bed is obtained after overcoming gravity by the single particles, whereas this bed acts analogously to a fluid. These fluidized particles are preferably treated with the melamine-formaldehyde precondensate or resin comprising solution as mentioned above, preferably via spray nozzles. After coating of the melamine-formaldehyde precondensate or resin onto the cores, the obtained particles agglomerate. Spraying can be conducted according to, for example, H. Uhlemann, L. Mörl, Fluidized Bed Spray Granulation, Berlin 2000, pages 69 to 125.

If a core material is used as a powder, this powder is agglomerated using aqueous melamine-formaldehyde resin mixtures by fluidized bed methods (granulation), before these agglomerates are coated with aqueous melamine-formaldehyde resins (coating). If the core material is used in the form of larger granulates, coating with the shell material can be conducted by spray granulation immediately.

Within the process for coating according to the present invention, powders and/or granulates of the core material are used in generally known apparatuses, for example fluidized bed spray granulation apparatuses of Glatt. Particle sizes of 30 to 300 µm, preferably 50 to 200 µm for granulation and 200 to 700 µm, preferably 250 to 500 µm, for coating, are preferred.

Within the process for the preparation of the core-shell microspheres according to the present invention, the effective or active substances are provided and then a spray granulation/coating using fluidized bed technology using melamine-formaldehyde resins, which are preferably in solution, particularly preferred in aqueous solution, preferred about 30 to 50% by weight, more preferred about 35 to 45% by weight, is conducted. Doing so, the effective and/or active substances are fluidized using a hot air stream at a temperature of 50 to 130°C and are sprayed with a melamine-formaldehyde resin solution, which dries and coats the effective and/or active substances, or these effective or active substances are first granulated and are coated afterwards.

In general the melamine-formaldehyde foams according to the present invention have a density of 3 bis 100 g/l, preferably 5 to 50 g/l, more preferably 5 to 25 g/L.

According to the present invention the melamine-formaldehyde foams comprising microspheres are obtainable batch wise or preferably continuously as sheets or webs generally in any desired thickness, advantageously in layered thicknesses ranging from 0.1 to 500 cm, preferably from 0.5 to 200 cm, more preferably from 1 to 100 cm, more particularly from 3 to 80 cm and most preferably from 5 to 50 cm. Moldings comprising melamine-formaldehyde foams according to the present invention are obtainable in a continuous manner or preferably in a batch wise manner.

The melamine-formaldehyde foams in the form of webs, sheets, moldings or some other form can be laminated or endowed with surface layers by generally customary methods on one, two, more or all sides, for example with paper, paper board, glass overlay mat, wood, plaster board, metal sheet or metal foil, plastic or self-supporting plastics foam/sheet which may optionally also be foamed. The surface layers can be applied in the course of foaming or subsequently. In the case of subsequent application, it is advantageous to use an adhesion promoter.

Because the melamine-formaldehyde foams of the present invention comprise microspheres filled with active and/or effective substances to be released, this release can be affected at any desired time by applying a suitable mechanical or thermal action to the foam. For example, the above-described active or effective substances, for example surfactants, detergents or dyes, for example inks, scents or biocidally acting substances, can be released through thermal, e. g. hot air, various forms of radiation, for example infrared or microwave radiation, or mechanical destruction like pressing, rolling, ultrasound etc. of the microspheres walls. This releases the content of the microspheres uniformly or almost uniformly and causes sweating of the surface structure (struts and nodes) even in the interior of the open-cell melamine-formaldehyde foam structure. The processes for thermal or mechanical destruction of microsphere shells are known in principle to a person skilled in the art and are described in the literature. For example, the foam can be compression molded to destroy the microsphere shells as described in EP-A-0 451 535 for example, by leading the foam though defined gap between two contra-rotating rolls in parallel alignment.

In addition to leading the foam through a gap between two co-rotating rolls, it is also possible for the foam to be transported through a conveyor belt and for a roll turning at the same circumferential speed as the speed of the moving foam to press down on the foam. The pressure on the foam can further be exerted by placing the foam for example into a press in which the ram presses down on the foam. In this case, however, continuous pressing is not possible.

The melamine-formaldehyde foams of the present invention are used for acoustical and/or thermal insulation in buildings, vehicles, railways, ships and in aircraft construction and also in space travel and as a cushioning material for the padding of seating areas.

The present invention therefore also relates to the use of melamine-formaldehyde foams of the present invention for acoustical and/or thermal insulation in buildings, vehicles, railways, ships and in aircraft construction and also in space travel and as a cushioning material for the padding of seating areas.

The melamine-formaldehyde foams of the present invention exhibit more particularly even at high loadings, i. e. microsphere contents and associated active and effective substance contents, good mechanical properties of the foam and better fixing of the microspheres in the foam. Furthermore, the microspheres can be incorporated in the foam in the course of foam production without any additional step.

The examples which follow illustrate the invention:

### Examples

### Methods of Measurement:

### Mechanical Properties, Elasticity:

Ram pressure measurements for evaluating the mechanical quality of the melamine resin foams were all carried out as described in US-A-4 666 948. A cylindrical ram having a diameter of 8 mm and a height of 10 cm was pressed into a cylindrical sample having a diameter of 11 cm and a height of 5 cm in the direction of foaming at an angle of 90% until the sample tore. The tearing force [N], hereinafter also referred to as ram pressure value, provides information as to the quality of the foam.

### Comparative Example V-A

### Producing a melamine/-formaldehyde-foam without microspheres.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 38% by weight of pentane, all % by weight being based on the weight of the precondensate, were added, this was followed by stirring and then foaming in a propylene mold (for foaming) by irradiation with microwave energy. After foaming, the foam was dried for 30 minutes.

This melamine-formaldehyde foam has a density of 8.7 g/l, an airflow resistance of 12.100 Pa*s/m² according to ISO 9053 and a ram pressure value of 20.9 N.

### Comparative example V-B

Producing a melamine-formaldehyde foam comprising 20% by weight of foam glass (being based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of foam glass (Poraver, particle size 0.4 to 0.6 mm), wherein all % by weight being based on the weight of the precondensate, were added, followed by stirring and then foaming in a polypropylene mold (for foaming) by irradiation with microwave energy. After foaming, the foam was dried for 30 minutes.

This melamine-formaldehyde foam had a density of 11.2 g/l, a ram pressure value of 17.1 N and an airflow resistance of 11.900 Pa*s/m² according to ISO 9053.

### Comparative example V-C

Producing a melamine-formaldehyde foam with 25% by weight of foam glass having an acrylate coating (based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of foam glass with an acrylate-coating (preparation according to WO 04/006689, example 3d, particle size 0.4 to 0.6 mm), all % by weight being based on the weight of the precondensate, were added, this was followed by stirring and then foaming in a polypropylene mold (for foaming) by irradiation with microwave energy. After foaming, the foam was dried for 30 minutes.

This melamine-formaldehyde foam had a density of 10.9 g/l, a ram pressure value of 16.9 N and an airflow resistance of 8680 Pa*s/m² according to ISO 9053.

### Comparative example V-D

Producing a melamine-formaldehyde foam with 25% by weight of foam glass having a polyurethane coating (based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of foam glass with a polyurethane coating (preparation according to WO 06/097389, example 1, particle size 0.4 to 0.6 mm), all % by weight being based on the weight of the precondensate, were added, this was followed by stirring and then foaming in a polypropylene mold (for foaming) by irradiation with microwave energy. After foaming, the foam was dried for 30 minutes.

This melamine-formaldehyde foam had a density of 10.7 g/l, a ram pressure value of 15.4 N and an airflow resistance of 8320 Pa*s/m² according to ISO 9053.

### Comparative example V-E

Producing a melamine-formaldehyde foam with 25% by weight of sodium sulfate (based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of sodium sulfate (particle size 0.4 to 0.6 mm), all % by weight being based on the weight of the precondensate, were added, this was followed by stirring and then foaming in a polypropylene mold (for foaming) by irradiation with microwave energy. After foaming, the foam was dried for 30 minutes.

This melamine-formaldehyde foam had a density of 10.8 g/l, a ram pressure value of 15.1 N and an airflow resistance of 7230 Pa*s/m² according to ISO 9053.

### Comparative example V-F

Producing a melamine-formaldehyde foam with 25% by weight of sodium sulfate having a polyester coating (based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of sodium sulfate with a polyester coating (preparation according to WO 1998/14413, example 1, particle size 0.4 to 0.6 mm), all % by weight being based on the weight of the precondensate, were added, this was followed by stirring and then foaming in a polypropylene mold (for foaming) by irradiation with microwave energy. After foaming, the foam was dried for 30 minutes.

This melamine-formaldehyde foam had a density of 10.5 g/l, a ram pressure value of 16.7 N and an airflow resistance of 7650 Pa*s/m² according to ISO 9053.

### Comparative example V-G

Producing a melamine-formaldehyde foam with 25% by weight of sodium lauryl sulfate (based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of sodium lauryl sulfate (particle size 0.4 to 0.6 mm), all % by weight being based on the weight of the precondensate, were added, this was followed by stirring and then foaming in a polypropylene mold (for foaming) by irradiation with microwave energy. After foaming, the foam was dried for 30 minutes.

This melamine-formaldehyde foam had a density of 9.7 g/l, a ram pressure value of 15.3 N and an airflow resistance of 6150 Pa*s/m² according to ISO 9053.

### Comparative example V-H

Producing a melamine-formaldehyde foam with 25% by weight of sodium lauryl sulfate having a polyamide coating (based on the melamine-formaldehyde precondensate) as filling material.

75 parts by weight of a spray-dried melamine-formaldehyde precondensate (molar ratio 1 : 3) were dissolved in 25 parts by weight of water, then 3% by weight of formic acid, 2% by weight of a sodium C₁₂/C₁₄-alkyl sulfate, 20% by weight of pentane and 25% by weight of sodium lauryl sulfate with a polyester coating (preparation according to WO 2012072545, example 1, particle size 0.4 to 0.6 mm), all % by weight being based on the weight of the precondensate, were added, this was followed by stirring and then foaming in a polypropylene mold (for foaming) by irradiation with microwave energy. After foaming, the foam was dried for 30 minutes.

This melamine-formaldehyde foam had a density of 9.9 g/l, a ram pressure value of 18.3 N and an airflow resistance of 7930 Pa*s/m² according to ISO 9053.

### Example 1

a) Producing of melamine-formaldehyde coated foam glass-granulate with 20% by weight melamine-formaldehyde (being based on the foam glass granulate).
   35 parts by weight of a spray-dried melamine-formaldehyde precondensate are dissolved in water and are treated with 0.1 % by weight Basantol 762 liquid (blue dye, aqueous solution of C.I. Direct Blue 199, added to better analyze the distribution of microspheres in the foam), wherein the % by weight are based on the weight of the precondensate, to be able to evaluate the coating of the granulate and the distribution in the foam. 4.6% by weight of formic acid, the % by weight being based on the precondensate, are added to this resin solution. The resin solution was transferred to a fluidized bed-spray granulating apparatus, type GPCG by Glatt. The foam glass (Poraver, particle size 0.4 to 0.6 mm) that is present therein is coated in the fluidized bed at a temperature of 80°C with 20 % by weight of melamine-formaldehyde resin.
   Light microscopic recordings showed a homogeneous coating. The foam glass with melamine-formaldehyde coating was sieved. The particle size of 0.4 to 0.6 mm was used for the following producing of melamine-formaldehyde foam:
b) Producing a melamine-formaldehyde foam having 25% by weight foam glass with a melamine-formaldehyde coating (being based on melamine-formaldehyde precondensate) as filling material.

75 parts by weight of a spray-dried-melamine-formaldehyde precondensate (molar ratio 1 : 3) were dissolved in 25 parts by weight of water, 3% by weight of formic acid, 2% by weight of a Na-C₁₂/C₁₄-alkyl sulfate, 20% by weight of pentane and 25% by weight of foam glass having a melamine-formaldehyde coating (0.4 to 0.6 mm), all % by weight being based on the precondensate, were added, this was followed by stirring and then foaming in a polypropylene mold (for foaming) by irradiation with microwave energy. After foaming, the foam was dried for 30 minutes.

The melamine-formaldehyde foam had a density of 11.0 g/l, a ram pressure value of 22.3 N and an airflow resistance of 12.130 Pa*s/m² according to ISO 9053.

### Example 2

a) Producing of melamine-formaldehyde coated sodium sulfate with 20% by weight melamine-formaldehyde (being based on the sodium sulfate).
   35 parts by weight of a spray-dried melamine-formaldehyde precondensate are dissolved in water and are treated with 0.1% by weight Basantol 762 liquid (blue dye, aqueous solution of C.I. Direct Blue 199, added to better analyze the distribution of microspheres in the foam), wherein the % by weight are based on the weight of the precondensate, to be able to evaluate the coating of the granulate and the distribution in the foam. 4.6% by weight of formic acid, all % by weight being based on the precondensate, are added to this resin solution. The resin solution was transferred to a fluidized bed-spray granulating apparatus, type GPCG by Glatt. The sodium sulfate (particle size 0.4 to 0.6 mm) that is present therein is coated in the fluidized bed at a temperature of 80°C with 20 % by weight of melamine resin.
   Light microscopic recordings showed a homogeneous coating. The sodium sulfate with melamine-formaldehyde coating was sieved. The particles size of 0.4 to 0.6 mm was used for the following producing of melamine-formaldehyde foam.
b) Producing a melamine-formaldehyde foam having 25% by weight of sodium sulfate with a melamine-formaldehyde coating (being based on melamine-formaldehyde precondensate) as filling material.

75 parts by weight of a spray-dried melamine-formaldehyde precondensate (molar ratio 1 : 3) were dissolved in 25 parts by weight of water, 3% by weight of formic acid, 2% by weight of a Na-C₁₂/C₁₄-alkyl sulfate, 20% by weight of pentane and 25% by weight of sodium sulfate having a melamine-formaldehyde coating (0.4 to 0.6 mm), all % by weight being based on the precondensate, were added, this was followed by stirring and then foaming in a polypropylene mold (for foaming) by irradiation with microwave energy. After foaming, the foam was dried for 30 minutes.

The melamine-formaldehyde foam had a density of 11.4 g/l, a ram pressure value of 26.1 N and an airflow resistance of 12.370 Pa*s/m² according to ISO 9053.

### Example 3

a) Producing of melamine-formaldehyde coated sodium lauryl sulfate with 20% by weight melamine-formaldehyde (being based on the sodium lauryl sulfate).
   35 parts by weight of a spray-dried melamine-formaldehyde precondensate are dissolved in water and are treated with 0.1% by weight Basantol 762 liquid (blue dye, aqueous solution of C.I. Direct Blue 199, added to better analyze the distribution of microspheres in the foam), wherein the % by weight are based on the weight of the precondensate, to be able to evaluate the coating of the granulate and the distribution in the foam. 4.6% by weight of formic acid, all % by weight being based on the precondensate, are added to this resin solution. The resin solution was transferred to a fluidized bed-spray granulating apparatus, type GPCG by Glatt. The sodium lauryl sulfate (particle size 0.4 to 0.6 mm) that is present therein is coated in the fluidized bed at a temperature of 80°C with 20 % by weight of melamine resin.
   Light microscopic recordings showed a homogeneous coating. The sodium lauryl sulfate with melamine-formaldehyde coating was sieved. The particles size of 0.4 to 0.6 mm was used for the following producing of melamine-formaldehyde foam.
b) Producing a melamine-formaldehyde foam having 10% by weight of sodium lauryl sulfate with a melamine-formaldehyde coating (being based on melamine-formaldehyde precondensate) as filling material.

75 parts by weight of a spray-dried melamine-formaldehyde precondensate (molar ratio 1 : 3) were dissolved in 25 parts by weight of water, 3% by weight of formic acid, 2% by weight of a Na-C₁₂/C₁₄-alkyl sulfate, 20% by weight of pentane and 25% by weight of sodium lauryl sulfate having a melamine-formaldehyde coating (0.4 to 0.6 mm), all % by weight being based on the precondensate, were added, this was followed by stirring and then foaming in a polypropylene mold (for foaming) by irradiation with microwave energy. After foaming, the foam was dried for 30 minutes.

The melamine-formaldehyde foam had a density of 9.6 g/l, a ram pressure value of 26.9 N and an airflow resistance of 12.150 Pa*s/m² according to ISO 9053.

Finally, the most important characteristics of the foams are summarized in the following table:

| | V-A | V-B | V-C | V-D | V-E | V-F | V-G | V-H | 1 | 2 | 3 |
|---|---|---|---|---|---|---|---|---|---|---|---|
| density [g/l] | 8.7 | 11.2 | 10.9 | 10.7 | 10.8 | 10.5 | 9.7 | 9.9 | 11.0 | 11.4 | 9.6 |
| ram pressure value [N] | 20.9 | 17.1 | 16.9 | 15.4 | 15.1 | 16.7 | 15.3 | 18.3 | 22.3 | 26.1 | 26.9 |
| airflow resistance [Pa*s/m²] | 12.100 | 11.900 | 8.680 | 8.320 | 7.230 | 7.650 | 6.150 | 7.930 | 12.130 | 12.370 | 12.150 |

### Result:

The comparison between example 1 and comparative example V-B shows that in the case of foam glass having a melamine-formaldehyde coating, the mechanical characteristics (herein acquired using the ram pressure value) are improved. The acoustic characteristics are almost the same. The mechanical and acoustic characteristics of comparative example V-C (acrylate coating) and V-D (polyurethane coating) are significantly worse compared to example 1.

The comparison between example 2 and comparative examples V-D and V-E show that the mechanical and acoustic characteristics of sodium sulfate being coated with melamine-formaldehyde coating are significantly improved compared to an uncoated salt (V-E) or a salt having a polyester coating (V-F).

The comparison between example 3 and comparative example V-G and V-H show that the mechanical and acoustic characteristics of sodium lauryl sulfate having a melamine-formaldehyde coating is essentially improved compared to an uncoated anionic sodium lauryl sulfate (V-G) and a sodium lauryl sulfate having a polyamide-coating (V-H).

Furthermore, it is clear that comparative examples V-B to V-H show reduced mechanical and acoustic characteristics compared to V-A (foam without microspheres). In contrast thereto, mechanical and acoustic characteristics of example 1 to 3 are similar or improved compared to comparative example V-A.

## Claims

1. Melamine-formaldehyde foam prepared from an unmodified melamine-formaldehyde precondensate devoid of any other thermoset-formers or other aldehydes comprising microspheres having a core comprising at least one active and/or effective substance selected from the group consisting of foam glass, sodium sulfate, sodium lauryl sulfate, polyethyleneglycols, cocoamides, fatty alcohols, quaternary ammonium salts, latent heat accumulators selected from the group consisting of paraffin, fatty acids, salt hydrates and mixtures thereof, flame retardants selected from the group consisting of aluminum hydroxide, magnesium hydroxide, hydrates, borates, red phosphor, organo halogen compounds, organo phosphates and mixtures thereof, intumescents containing the three active additives, acid source, carbonific or polyhydric compound and blowing agent, hydrophobicizing agents selected from the group consisting of silicon oil, fluoro carbon resin and mixtures thereof, adhesives selected from the group consisting ethylene-vinyl acetate (EVA) and a tackifier, natural rubber and mixtures thereof, formaldehyde scavenger selected from the group consisting of urea, ethylene urea, ethylene glycol, polyols, amides, hydrazides, sorbitol, carbohydrazides and mixtures thereof, photocatalytically active titanium dioxide, skin care products and formulations selected from the group consisting of coconut oil, vitamins like E, C, B3, and mixtures thereof, abrasives selected from the group consisting of silicates, chalk, marble powder, inorganic nanoparticles and mixtures thereof and mixtures thereof and having a shell consisting of melamine-formaidehyde resin prepared from an unmodified melamine-formaldehyde precondensate devoid of any other thermoset-formers or other aldehydes.

2. Melamine-formaldehyde foam according to claim 1, wherein the microspheres have an average diameter (D₅₀, averaged by volume, Malvern, Fraunhofer-Diffraction) in the range of 100 µm to 1000 µm.

3. Melamine-formaldehyde foam according to claim 1 or 2, wherein the amount of microspheres is 0.1 to 60% by weight, in respect of the melamine-formaldehyde precondensate used for foam production.

4. Melamine-formaldehyde foam according to any of claims 1 to 3, wherein the microspheres are embedded into the open-celled pores of the foam structure.

5. Process for the preparation of a melamine-formaldehyde foam according to any of claims 1 to 4, comprising at least process steps a) and b):
a) Heating of a mixture comprising at least one melamine-formaldehyde precondensate, microspheres comprising the at least one active and/or effective substance in the core and having a shell comprising at least one melamine-formaldehyde resin, at least one blowing agent and optionally further additives, to obtain a foam, and
b) drying of the foam that is obtained in step a).

6. Process according to claim 5, wherein molar ratio of formaldehyde: melamine in the precondensate is in the range of 1.3 to 5.

7. Process according to claim 5 or 6, wherein the microspheres have an average diameter (D₅₀, averaged by volume, Malvern, Fraunhofer-Diffraction) in the range of 100 µm to 1000 µm.

8. The use of melamine-formaldehyde foam according to any of claims 1 to 4 for acoustical and/or thermal insulation in buildings, vehicles, railways, ships and in aircraft construction and also in space travel and as a cushioning material for the padding of seating areas.

## Patentansprüche

1. Melamin-Formaldehyd-Schaumstoff, hergestellt aus einem unmodifizierten Melamin-Formaldehyd-Vorkondensat, das keine anderen Duroplastbildner oder andere Aldehyde enthält, umfassend Mikrokügelchen, die einen Kern aufweisen, der wenigstens einen aktiven und/oder wirksamen Stoff ausgewählt aus der Gruppe bestehend aus Schaumglas, Natriumsulfat, Natriumlaurylsulfat, Polyethylenglycolen, Cocoamiden, Fettalkoholen, quaternären Ammoniumsalzen, Latentwärmespeichern ausgewählt aus der Gruppe bestehend aus Paraffin, Fettsäuren, Salzhydraten und Gemischen davon, Flammhemmern ausgewählt aus der Gruppe bestehend aus Aluminiumhydroxid, Magnesiumhydroxid, Hydraten, Boraten, rotem Phosphor, Organohalogenverbindungen, Organophosphaten und Gemischen davon, anschwellenden Stoffen, die die drei aktiven Zusatzstoffe Säurequelle, Karbonifikations- oder polyhydrische Verbindung und Blähmittel enthalten, hydrophobizierenden Mitteln ausgewählt aus der Gruppe bestehend aus Siliconöl, Fluorkohlenstoffharz und Gemischen davon, Klebstoffen ausgewählt aus der Gruppe bestehend aus Ethylen-Vinylacetat (EVA) und einem Klebrigmacher, natürlichem Kautschuk und Gemischen davon, Formaldehydfängern ausgewählt aus der Gruppe bestehend aus Harnstoff, Ethylenharnstoff, Ethylenglycol, Polyolen, Amiden, Hydraziden, Sorbit, Carbohydraziden und Gemischen davon, photokatalytisch aktivem Titandioxid, Hautpflegeprodukten und -formulierungen ausgewählt aus der Gruppe bestehend aus Kokosnussöl, Vitaminen wie E, C, B3 und Gemischen davon, Abrasivstoffen ausgewählt aus der Gruppe bestehend aus Silicaten, Kreide, Marmorpulver, anorganischen Nanopartikeln und Gemischen davon und Gemischen davon umfasst, und die eine Schale aufweisen, die aus Melamin-Formaldehyd-Harz besteht, das aus einem unmodifizierten Melamin-Formaldehyd-Vorkondensat hergestellt ist, das keine anderen Duroplastbildner oder andere Aldehyde enthält.

2. Melamin-Formaldehyd-Schaumstoff gemäß Anspruch 1, wobei die Mikrokügelchen einen mittleren Durchmesser (D₅₀, volumengemittelt, Malvern, Fraunhofer-Beugung) in dem Bereich von 100 µm bis 1000 µm aufweisen.

3. Melamin-Formaldehyd-Schaumstoff gemäß Anspruch 1 oder 2, wobei die Menge an Mikrokügelchen 0,1 bis 60 Gew.-% bezogen auf das für die Schaumstoffherstellung verwendete Melamin-Formaldehyd-Vorkondensat beträgt.

4. Melamin-Formaldehyd-Schaumstoff gemäß einem der Ansprüche 1 bis 3, wobei die Mikrokügelchen in die offenzelligen Poren der Schaumstoffstruktur eingebettet sind.

5. Verfahren zum Herstellen eines Melamin-Formaldehyd-Schaumstoffs gemäß einem der Ansprüche 1 bis 4, umfassend wenigstens die Verfahrensschritte a) und b):
a) Erhitzen eines Gemischs, das wenigstens ein Melamin-Formaldehyd-Vorkondensat, Mikrokügelchen, die wenigstens einen aktiven und/oder wirksamen Stoff in dem Kern umfassen und eine Schale aufweisen, die wenigstens ein Melamin-Formaldehyd-Harz umfasst, wenigstens ein Blähmittel und gegebenenfalls weitere Zusatzstoffe umfasst, um einen Schaumstoff zu erhalten, und
b) Trocknen des bei Schritt a) erhaltenen Schaumstoffs.

6. Verfahren gemäß Anspruch 5, wobei das Molverhältnis von Formaldehyd:Melamin in dem Vorkondensat in dem Bereich von 1,3 bis 5 liegt.

7. Verfahren gemäß Anspruch 5 oder 6, wobei die Mikrokügelchen einen mittleren Durchmesser (D₅₀, volumengemittelt, Malvern, Fraunhofer-Beugung) in dem Bereich von 100 µm bis 1000 µm aufweisen.

8. Verwendung von Melamin-Formaldehyd-Schaumstoff gemäß einem der Ansprüche 1 bis 4 für akustische und/oder Wärmeisolation in Gebäuden, Fahrzeugen, Eisenbahnen, Schiffen und im Luftfahrzeugbau und auch bei der Raumfahrt sowie als Polsterungsmaterial für die Polsterung von Sitzbereichen.

## Revendications

1. Mousse de mélamine-formaldéhyde préparée à partir d'un précondensat de mélamine-formaldéhyde non modifié dépourvu de tous autres constituants formant des composés thermodurcissables ou d'autres aldéhydes, comprenant des microsphères comportant un noyau comprenant au moins une substance active et/ou efficace sélectionnée dans le groupe constitué du verre mousse, du sulfate de sodium, du laurylsulfate de sodium, des polyéthylènes glycols, des cocoamides, des alcools gras, des sels d'ammonium quaternaire, d'accumulateurs de chaleur latente sélectionnés dans le groupe constitué de la paraffine, des acides gras, des sels hydratés et de mélanges de ceux-ci, d'agents ignifuges sélectionnés dans le groupe constitué de l'hydroxyde d'aluminium, de l'hydroxyde de magnésium, des hydrates, des borates, du phosphore rouge, des composés organo-halogénés, des organo-phosphates et de mélanges de ceux-ci, d'agents intumescents contenant les trois additifs actifs, une source d'acide, un composé dont la décomposition produit une masse de carbone ou un composé polyhydrique et un agent gonflant, des agents d'hydrophobie sélectionnés dans le groupe constitué de l'huile de silicium, d'une résine de fluorocarbone et de mélanges de celles-ci, d'adhésifs sélectionnés dans le groupe constitué de l'éthylène-acétate de vinyle (EVA) et d'un agent collant, du caoutchouc naturel et de mélanges de ceux-ci, d'un piégeur de formaldéhyde sélectionné dans le groupe constitué de l'urée, de l'éthylène urée, de l'éthylène glycol, des polyols, des amides, des hydrazides, du sorbitol, des carbohydrazides et de mélanges de ceux-ci, du dioxyde de titane photocatalytiquement actif, de produits et de formulations de soins cutanés sélectionnés dans le groupe constitué de l'huile de noix de coco, de vitamines comme les vitamines E, C, B3 et de mélanges de celles-ci, d'abrasifs sélectionnés dans le groupe constitué des silicates, de la craie, de la poudre de marbre, des nanoparticules inorganiques et de mélanges de celles-ci, et de leurs mélanges, et comportant une enveloppe constituée de résine de mélamine-formaldéhyde préparée à partir d'un précondensat de mélamine-formaldéhyde non modifié dépourvu de tous autres constituants formant des composés thermodurcissables ou d'autres aldéhydes.

2. Mousse de mélamine-formaldéhyde selon la revendication 1, dans laquelle les microsphères ont un diamètre moyen (D₅₀, moyenne en volume, Malvern, diffraction de Fraunhofer) de 100 µm à 1 000 µm.

3. Mousse de mélamine-formaldéhyde selon la revendication 1 ou 2, dans laquelle la quantité de microsphères est de 0,1 à 60 % en poids, relativement au précondensat de mélamine-formaldéhyde utilisé pour la production de la mousse.

4. Mousse de mélamine-formaldéhyde selon l'une quelconque des revendications 1 à 3, dans laquelle les microsphères sont incorporées dans les pores à alvéoles ouvertes de la structure de la mousse.

5. Procédé de préparation d'une mousse de mélamine-formaldéhyde selon l'une quelconque des revendications 1 à 4, comprenant au moins les étapes de procédé a) et b) :
a) le chauffage d'un mélange comprenant au moins un précondensat de mélamine-formaldéhyde, des microsphères comprenant ladite au moins une substance active et/ou efficace dans le noyau et comportant une enveloppe comprenant au moins une résine de mélamine-formaldéhyde, au moins un agent gonflant et optionnellement des additifs supplémentaires, pour obtenir une mousse, et
b) le séchage de la mousse qui est obtenue à l'étape a) .

6. Procédé selon la revendication 5, dans lequel le rapport molaire formaldéhyde:mélamine dans le précondensat est de 1,3 à 5.

7. Procédé selon la revendication 5 ou 6, dans lequel les microsphères ont un diamètre moyen (D₅₀, moyenne en volume, Malvern, diffraction de Fraunhofer) de 100 µm à 1 000 µm.

8. Utilisation d'une mousse de mélamine-formaldéhyde selon l'une quelconque des revendications 1 à 4 pour une isolation acoustique et/ou thermique dans des bâtiments, des véhicules, des chemins de fer, des navires et dans la construction aéronautique ainsi que dans les voyages spatiaux et comme matériau d'amortissement pour le rembourrage de zones occupées par des places assises.
